# EUROPÄISCHE PATENTSCHRIFT

(11) **EP 2 885 557 B1**
(45) Veröffentlichungstag und Bekanntmachung des Hinweises auf die Patenterteilung: **14.11.2018**
(21) Anmeldenummer: 13762753.5
(22) Anmeldetag: 16.08.2013
(51) Int. Cl.: F16G 11/02, A63B 9/00

(54) **KLEMME ZUR VERBINDUNG VON SEILEN**
CLAMP FOR CONNECTING ROPES
PINCE D'ASSEMBLAGE DE CÂBLES

(30) Priorität: 16.08.2012 DE 102012214557; 16.08.2012 US 201261683737 P
(43) Veröffentlichungstag der Anmeldung: 24.06.2015
(73) Patentinhaber: Berliner Seilfabrik GmbH & Co., 13407 Berlin (DE)
(72) Erfinder: KÖHLER, Karl-Heinz, 13467 Berlin (DE)
(74) Vertreter: Gulde & Partner
(86) Internationale Anmeldenummer: PCT/EP2013/067141
(87) Internationale Veröffentlichungsnummer: WO 2014/027088

(56) Entgegenhaltungen:
- EP-B1- 0 007 607
- FR-A5- 2 058 099
- US-A- 5 898 131

## Beschreibung

Die Erfindung betrifft eine Klemme zur Verbindung von Seilen mit den im Oberbegriff des Anspruchs 1 genannten Merkmalen sowie ein Netz aus mit Klemmen verbundenen Seilsträngen.

Eine Klemme der gattungsgemäßen Art ist bekannt. So offenbart EP 0 007 607 B1 eine Klemme zur Verbindung von Seilen, insbesondere zur Bildung von Netzen, bestehend aus einem unter Druck verformbaren Werkstoff mit zwei auf gegenüberliegenden Seiten der einstückigen Klemme angeordneten U-förmigen Ausnehmungen, in die die zu verbindenden Seilstränge einlegbar sind. Die schenkelartigen Wände der U-förmigen Ausnehmungen werden nach dem Einlegen der Seilstränge gegeneinander gedrückt und verformt, um je einen den Seilstrang umschließenden Ring zu bilden. Die Klemme weist vor der Verformung im Wesentlichen die Form eines Doppelkegels aus zwei Kegelstümpfen auf, wobei die U-förmigen Ausnehmungen jeweils im Kegelstumpf angeordnet sind.

Derartige Klemmen werden beispielsweise für Seile, beispielsweise Drahtseile, oder Seile aus textilen Fasern eingesetzt, wobei die Seile z.B. als Kletternetze für Kinderspielplätze oder dergleichen dienen sollen. Mittels der Klemme werden sich kreuzende Seile an einem Kreuzungspunkt miteinander verbunden.

Bei der bekannten Klemme ist nachteilig, dass nach dem Einlegen der Seile in die Klemme hier eine Fixierung der Klemme in Bezug zu den Seilen erfolgen muss. Die U-förmigen Ausnehmungen, in die die Seile eingelegt werden, sind gleich groß oder geringfügig größer als der Umfang der zu verbindenden Seile. Hierdurch können die Seile aus den U-förmigen Ausnehmungen - bevor ein Verpressen der Klemme erfolgt - ungewollt herausrutschen bzw. verrutschen. Eine zusätzliche Positionierung vor dem Verpressen oder eine sofortige Verpressung verbunden mit einem dabei erforderlichen Halten der Position der Seile ist somit erforderlich. Gerade wenn derartige Klemmen vor Ort, das heißt außerhalb von Werkstätten verpresst werden sollen, ist hiermit ein erheblicher Aufwand verbunden.

Weiterhin offenbart die FR 2 058 099 A5 eine Montagevorrichtung für die Bildung von Knoten an den Schnittpunkten von Kabeln. An der Vorrichtung sind Korundpartikel vorgesehen, die die Reibung zwischen einer Aufnahmenut für die Kabel und diesen Kabeln erhöhen.

US 5 898 131 A zeigt zudem einen Verbinder zur simultanen Verbindung zweier Leitungen. Der Verbinder hat eine Rippe. Die Rippe verläuft entlang eines Aufnahmebereichs quer zur Erstreckungsrichtung der zu verbindenden Leitungen und erstreckt sich dabei über beide Wände sowie den Grund des Aufnahmebereichs.

Der Erfindung liegt daher die Aufgabe zugrunde, eine Klemme der gattungsgemäßen Art zu schaffen, mit der in einfacher Weise eine Vorpositionierung der zu verbindenden Seile möglich ist.

Erfindungsgemäß wird diese Aufgabe durch eine Klemme mit den im Anspruch 1 genannten Merkmalen gelöst.

Dadurch, dass die schenkelartigen Wände wenigstens eine in Richtung der U-förmigen Ausnehmung weisende Erhöhung umfassen, wobei ein Abstand gegenüberliegender Erhöhungen kleiner ist als ein Durchmesser der zu verbindenden Seilstränge wird vorteilhaft erreicht, dass zwischen der noch nicht verformten Klemme und den zu verbindenden Seilsträngen quasi ein Vormontage-Zustand erreicht werden kann.

Es ist vorgesehen, dass eine Erstreckung der Erhöhung von der Schenkelwand dem Durchmesser einer Litze des Seilstrangs entspricht. Dies ermöglicht einen guten Halt des Seilstrangs.

Dies kann ebenso dadurch erreicht werden, dass nur eine der schenkelartigen Wände einer U-förmigen Ausnehmung wenigstens eine in Richtung der U-förmigen Ausnehmung weisende Erhöhung umfasst, wobei der Abstand zwischen der Erhöhung und der gegenüber liegenden schenkelartigen Wand geringfügig kleiner ist als ein Durchmesser der zu verbindenden Seilstränge.

Die Seile werden durch die in die U-förmige Ausnehmung einkragenden Vorsprünge in der gewünschten Position gehalten. Die Seilstränge rasten quasi in die noch nicht verformte Klemme ein und behalten ihre einmal eingenommene Position bei. Die Seilstränge selber bestehen aus einer Anzahl verseilter Litzen, so dass eine gewisse Elastizität in radialer Richtung gegeben ist. Diese gestattet, dass die zu verbindenden Seilstränge zumindest partiell elastisch verformt werden und die Vorsprünge beim Einlegen in die noch nicht verformte Klemme passieren können. Die Vorsprünge halten dann die Seilstränge in dieser Position. Die Vorsprünge können zwischen Litzen oder zwischen außenliegenden Drähten oder Garnen der Seilstränge eingreifen, wodurch die Seilstränge auch in axialer Richtung vorfixiert werden.

In bevorzugter Ausgestaltung der Erfindung ist vorgesehen, dass die Erhöhungen wenigstens einen Noppen umfassen. Hierbei ist es vorteilhaft möglich, dass die Erhöhungen in einfacher Weise in die Rohklemme, das heißt in die Klemme vor Verformung, integriert werden können. Diese Noppen lassen sich einstückig während des Herstellungsprozesses der Klemme in einfacher Weise integrieren.

In weiterer bevorzugter Ausgestaltung der Erfindung ist vorgesehen, dass ein Abstand der Noppen vom Grund der U-förmigen Ausnehmungen größer ist als ein halber Durchmesser und kleiner als der Durchmesser der zu verbindenden Seilstränge, insbesondere drei Viertel, vorzugsweise zwei Drittel der Durchmesser der zu verbindenden Seilstränge beträgt. Hierdurch wird vorteilhaft möglich, die noppenartigen Erhöhungen derart anzuordnen, dass quasi ein Einrasten der Seilstränge in die U-förmigen Ausnehmungen erfolgt und diese zugleich ihre gewünschte Position vor dem Verpressen der Klemme einnehmen. Die Seilstränge liegen quasi mit ihrem Umfang am der dem Umfang angepassten U-förmigen Ausnehmung an und sind in Richtung der Öffnungen der U-förmigen Ausnehmungen und auch axial fixiert.

Die Erhöhung kann sich in einer parallel zu beiden Schenkelwänden einer U-förmigen Ausnehmung verlaufenden Längs- oder Axialrichtung über die gesamte Länge der Schenkelwand erstrecken. Dies hat den Vorteil einer vergrößerten Haltekraft im Vergleich zu einer kürzeren Erhöhung. Die Länge der Erhöhung kann beispielsweise anhand des Seilmaterials und/oder der Verwendung des Netzes bemessen werden.

Vorteilhafterweise kann eine Schenkelwand mehrere Erhöhungen umfassen, wobei die Erhöhungen in einer parallel zu beiden Schenkelwänden einer U-förmigen Ausnehmung verlaufenden Längsrichtung angeordnet sind. So besteht ein guter Halt des Seiles über die Länge der Ausnehmung, während die Kraft zum Einlegen des Seils in die Ausnehmung, das heißt hinter die Erhöhungen, nicht oder nur unwesentlich im Vergleich zu einer Erhöhung ansteigt.

Die Erhöhung kann von einer Wand über einen Grund der Ausnehmung zu der gegenüberliegenden Wand verlaufen. Diese durchgehende Erhöhung hat eine verstärkte Klemmwirkung und lässt sich einfacher herstellen.

Gemäß einem weiteren Aspekt der Erfindung besteht ein Netz aus Seilen mit Seilsträngen und mindestens einer Klemme wie zuvor beschrieben, wobei zwei Seilstränge mit einer Klemme verbunden sind. Es gelten die gleichen Vorteile und Modifikationen wie oben beschrieben.

Die Erfindung wird nachfolgend in den Ausführungsbeispielen und anhand der zugehörigen Zeichnungen näher erläutert.

Es zeigen:
- Fig. 1: eine perspektivische Darstellung von zwei sich kreuzenden Seilen die mittels einer erfindungsgemäßen Klemme verbunden sind,
- Fig. 2: einen Schnitt durch die Darstellung der Fig. 1 entsprechend der Schnittlinie II-II,
- Fig. 3 bis 6: zwei Ansichten, eine Draufsicht und eine Unteransicht der Klemme nach den Fig. 1 und 2,
- Fig. 7: eine Seitenansicht einer erfindungsgemäßen Klemme im verarbeiteten Zustand in einer abgewandelten Ausführungsform,
- Fig. 8: eine Draufsicht auf ein Ausführungsbeispiel der Fig. 7,
- Fig. 9 bis 11: zwei Seitenansichten und eine Draufsicht des Ausführungsbeispiels, das in den Fig. 7 und 8 gezeigt ist,
- Fig. 12 und 13: eine abgewandelte Ausführungsform der Erfindung in Draufsicht und Seitenansicht,
- Fig. 14: eine perspektivische Darstellung des Werkzeuges, das bei der Erfindung Verwendung findet,.
- Fig. 15 und 16: eine perspektivische Darstellung einer weiteren Ausführungsform der erfindungsgemäßen Klemme, und
- Fig. 17 bis 20: zwei Ansichten, eine Draufsicht und eine Schnittdarstellung der Klemme nach den Fig. 15 und 16.

Die Klemme 1 gemäß der Erfindung besteht vorzugsweise aus Aluminium. Es kann aber auch ein anderer Werkstoff Verwendung finden, beispielsweise Stahl oder auch Kunststoff, wobei beim Kunststoff für die Verformung auch eine Wärmeeinwirkung angewandt werden kann.

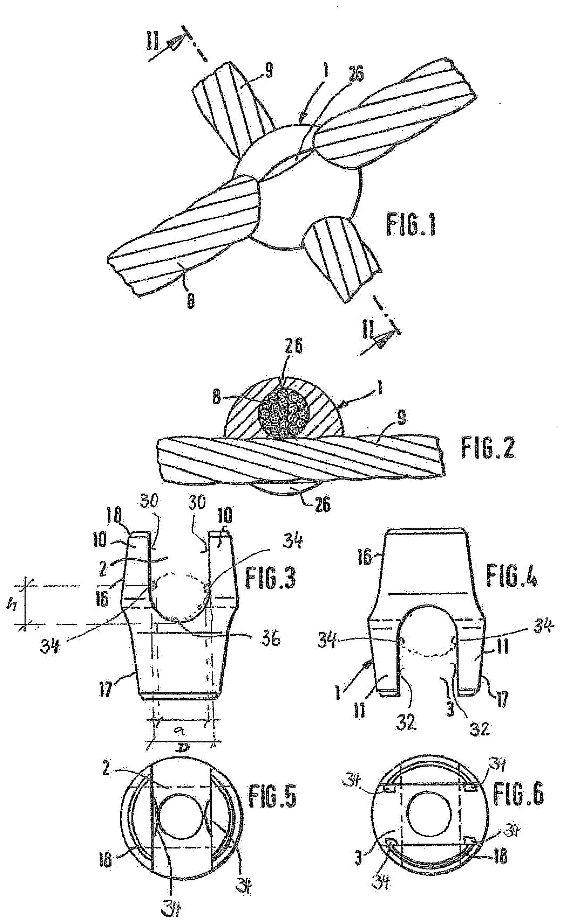

Die Klemme 1 nach den Fig. 1 bis 6 ist aus einem Rotationskörper gefertigt und die Gestalt ist so gewonnen, dass zunächst im Wesentlichen ein Doppelkegel geformt wird, bestehend aus den beiden Kegeln 16 und 17. Der Kegelwinkel beträgt je etwa 15°, wobei jedoch Schwankungen zwischen 10 und 20° möglich sind. Auf diese Weise wird ein günstiges Verhältnis zwischen den Außenabmessungen einerseits und den zu beherrschenden Verformungskräften bzw. den Abmessungen im fertigen Zustand erhalten.

In den Doppelkegel sind die Ausnehmungen 2 und 3 eingebracht, wobei die Tiefe dieser Ausnehmungen so gewählt ist, dass ihre Summe die gesamte Höhe der Klemme etwas übersteigt. Auf diese Weise wird erreicht, dass sich diese Ausnehmungen 2 und 3 im Mittelbereich durchdringen. Diese Bauweise hat zur Folge, dass sich die Seilstränge 8 und 9 an der Berührungsstelle verformen, was den Vorteil mit sich bringt, dass die Gesamtabmessungen der Klemme 1 im fertigen Zustand etwas verringert sind.

Die Ausnehmung 2 wird von den Wänden 10 begrenzt, während die Ausnehmung 3 von den Wänden 11 begrenzt ist. Am oberen und unteren Ende des zu verformenden Rohlings empfiehlt es sich Abschrägungen 18 anzuordnen.

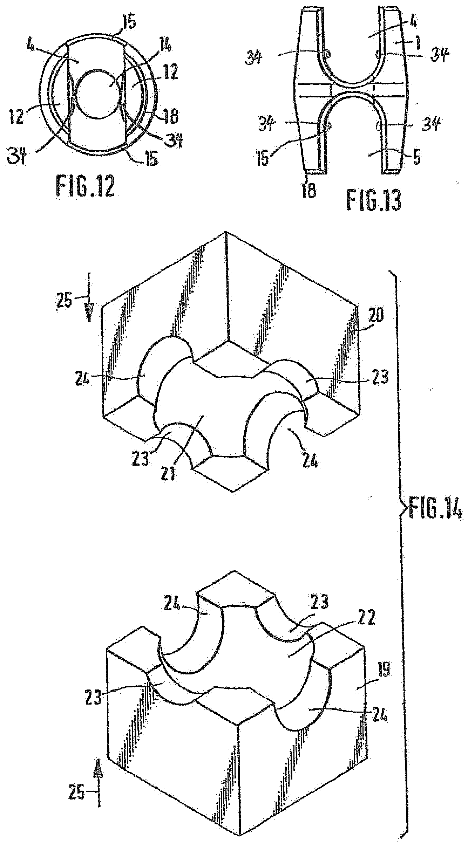

Zur Erreichung einer Klemmverbindung wird in der Ausnehmung 2 beispielsweise der Seilstrang 8 von zwei sich kreuzenden Seilsträngen eingelegt, während die Ausnehmung 3 den anderen Seilstrang 9 aufnimmt. Die so vorbereitete Verbindungsstelle wird in ein Werkzeug eingelegt, das aus zwei im Wesentlichen gleichförmig ausgestalteten Teilen besteht, wie es in der Fig. 14 dargestellt ist.

Anhand der Fig. 3 bis 6 wird deutlich, dass an den Innenseiten 30 bzw. Innenseiten 32 der Wände 10 bzw. 11 Erhöhungen oder Vorsprünge 34 vorgesehen sind. Diese Erhöhungen 34 werden von gegenüberliegenden Noppen gebildet und führen zu einer partiellen Verengung des Querschnittes der U-förmigen Ausnehmungen 2 bzw. 3. Ein Abstand a der gegenüberliegenden noppenartigen Erhöhungen 34 ist hierbei so gewählt, dass dieser kleiner ist als ein Durchmesser D der zu verbindenden Seilstränge. Ein Abstand h der Noppen von einem Grund 36 der Ausnehmungen 2 bzw. 3 ist hierbei größer als ein halber Durchmesser D der zu verbindenden Seilstränge. Der Abstand h beträgt hierbei beispielsweise drei Viertel oder zwei Drittel des Durchmesser D der zu verbindenden Seilstränge.

Die Angaben sind jetzt nur in Figur 3 eingetragen, gelten natürlich auch für die Darstellung in Fig. 4.

Bei den in den Fig. 3 und 4 angedeuteten eingelegten zu verbindenden Seilsträngen 8 bzw. 9 wird deutlich, dass diese von oben in die U-förmige Ausnehmung 2 bzw. 3 eingebracht werden und durch die noppenartigen Erhöhungen 34 am Grund 36 der Ausnehmungen 2 bzw. 3 gehalten werden. Es muss quasi eine geringe Kraft aufgebracht werden, damit die Seilstränge 8 bzw. 9 in die U-förmigen Ausnehmungen 2 bzw. 3 einrasten. Diese werden dann durch die noppenartigen Erhöhungen 34 an der einmal gewählten Position gehalten und können von alleine, das heißt ohne Aufbringen einer entgegen gerichteten Kraft nicht aus den Ausnehmungen 2 bzw. 3 herausrutschen. Hierdurch wird erreicht, dass eine Vorfixierung der zu verbindenden Seilstränge 8 und 9 in der noch nicht verformten Klemme 1 gegeben ist. Bei der späteren Verformung, das heißt bei der Montage der Klemme mit zu verbindenden Seilsträngen wird damit eine gewünschte Positionierung sicher eingehalten, ohne dass zusätzliche weitere Hilfsmittel notwendig sind. Insbesondere kann eine vor Ort Montage in einfacher Weise erfolgen, da eine einmal vorgewählte Position der Seilstränge 8 bzw. 9 innerhalb der Klemme 1 beibehalten wird.

Fig. 5 zeigt in Draufsicht auf die Ausnehmung 2 zwei Erhöhungen 34, die sich jeweils mittig über eine Länge von etwa der Hälfte einer Wand in Längsrichtung oder axialer Richtung der Ausnehmung 2 erstrecken.

In Fig. 6 sind jeweils zwei Erhöhungen 34 je Wand dargestellt, die in Längsrichtung hintereinander, das heißt mit gleichem Abstand zum Grund der Ausnehmung, angeordnet sind. Die Länge der beiden Erhöhungen 34 kann der Länge der einzelnen Erhöhung aus Fig. 5 entsprechen, so dass die Kraft zum Einlegen des Seilstrangs identisch ist.

Nach einer weiteren nicht dargestellten Ausführungsvariante ist auch möglich, dass nur eine der Wände 10 bzw. 11 eine noppenartige Erhöhung 34 aufweist. Entscheidend ist, dass diese noppenartige Erhöhung 34 einen in Position gebrachten Seilstrang 8 bzw. 9 in dieser Position verrutschsicher hält.

Jeder der beiden Teile 19 und 20 des Werkzeugs aus Fig. 14 besitzt eine halbkugelförmige Ausnehmung 21 bzw. 22 und die Wände außerhalb der Ausnehmung 21 bzw. 22 sind mit halbzylinderförmigen Ausnehmungen 23 bzw. 24 ausgestattet. Die Seilkreuzung mit der unverformten Klemme wird in der Weise in das Werkzeug eingelegt, dass beispielsweise der untere Seilstrang 9 in die größer ausgebildete Ausnehmung 24 eingelegt wird und die beiden Werkzeugteile 19 und 20 wirken jeweils in der Weise zusammen, dass sich immer die Ausnehmungen 23 und 24 ergänzen. Bei Anwendung eines entsprechenden Pressdruckes in Richtung der Pfeile 25 wird die Klemme 1 so verformt, dass im Wesentlichen ein kugelförmiges Gebilde erhalten wird. Die Wände 10 und 11 nähern sich dabei einander bis sie sich berühren. Bei der fertigen Klemme wird ein kleiner keilförmiger Spalt 26 entstehen.

Die fertige Klemme hat nur vergleichsweise geringe Abmessungen, die ungefähr in allen Richtungen einander entsprechen. In aller Regel werden die erreichten Haltekräfte ausreichen.

Besonders günstig ist bei der Erfindung, dass, wie beispielsweise die Fig. 2 erkennen lässt, die Basis der verformten Wände 10 bzw. 11 verhältnismäßig breit ausgebildet ist, so dass, obwohl sich die Wände nach der Verformung nur berühren und nicht miteinander verschweißt oder sonst wie verbunden sind, große Haltekräfte erzielt werden.

Die Presskräfte, von denen die Haltekräfte abhängen, sind den jeweils verarbeiteten Seilsträngen anzupassen. Werden Drahtseile verarbeitet, wird man höhere Presskräfte anwenden können als beispielsweise bei Seilen aus textilen Fasern oder Seilen, deren Außenfläche von textilen Fasern gebildet ist.

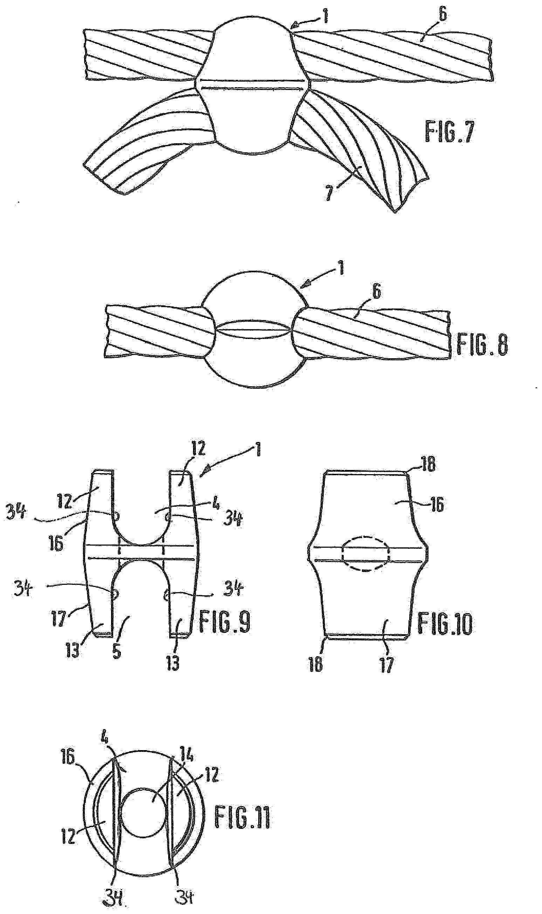

Während die Fig. 1 bis 6 das Ausführungsbeispiel zeigen, bei dem zwei sich kreuzende Seilstränge 8 und 9 verbunden werden, zeigt die Variante nach den Fig. 7 bis 11 ein Anwendungsbeispiel der Erfindung mit parallelen Seilsträngen 6 und 7. Die Klemme 1 besitzt in diesem Falle ebenfalls U-förmige Ausnehmungen 4 und 5, die jedoch, wie die Fig. 9 deutlich erkennen lässt, zueinander parallel gerichtet sind. Bei dieser Bauweise ist es auch nicht möglich, dass sich die Ausnehmungen gegenseitig durchdringen, weil dies die Klemme zerteilen würde. Um aber dennoch eine optimale Verformbarkeit sicherzustellen, empfiehlt es sich, im Inneren der Klemme einen Kanal 14 vorzusehen.

Die Ausbildung der Außenfläche als Doppelkegel 16 und 17 und auch die Anbringung der Abschrägung 18 entspricht dem oben beschriebenen Ausführungsbeispiel der Fig. 1 bis 6.

Auch bei den in Fig. 9 gezeigten Ausführungsbeispielen besitzt die Klemme 1 bereits die anhand der Fig. 3 und 4 erläuterten noppenartigen Erhöhungen 34. Hinsichtlich der Anordnung und der Funktion dieser Erhöhungen 34 wird auf die Erläuterungen zu Fig. 3 und 4 verwiesen.

Wegen der Besonderheiten der Ausführungsform nach den Fig. 7 bis 11 weicht die fertige Klemme 1 in diesem Falle etwas mehr von der Kugelgestalt ab. In der Ebene der beiden Seilstränge 6 und 7 werden die Abmessungen geringfügig größer sein, als beispielsweise senkrecht hierzu. Diese Abweichungen sind jedoch geringfügig.

Fig. 11 zeigt in Draufsicht auf die Ausnehmung 4 zwei Erhöhungen 34, die sich jeweils über die gesamte Länge der Wand 12 in Längsrichtung oder axialer Richtung der Ausnehmung 4 erstrecken.

Überraschenderweise ist gefunden worden, dass das Ausführungsbeispiel nach den Fig. 7 bis 11 mit dem gleichen Werkzeug verarbeitet werden kann, wie das Ausführungsbeispiel der Fig. 1 bis 6. Dabei ist es nur notwendig, den Werkzeugteil 20 gegenüber dem Werkzeugteil 19 um 90° zu drehen, so dass jeweils Ausnehmungen 23 oder Ausnehmungen 24 zusammentreffen. Die Ausnehmungen 23 sind in diesem Falle ohne Funktion und am Ende des Pressvorganges werden die Werkzeuge einen Abstand voneinander einhalten.

Die Fig. 12 und 13 deuten eine Variante einer Klemme an, bei der die Begrenzungen 15 der Wände 12 und 13 der U-förmigen Ausnehmungen 4 und 5 abgeschrägt sind. Diese Abschrägung wird dann auch an der fertigen Klemme erhalten. Durch eine solche Abschrägung ist die Beweglichkeit der in der Klemme gehaltenen Seile etwas verbessert und die Gefahr, dass die Begrenzungen der Außenwände scharfkantig in das Seil einschneiden, ist beseitigt.

Fig. 12 zeigt in Draufsicht auf die Ausnehmung 4 zwei Erhöhungen 34, die jeweils mittig an der Wand 12 angeordnet sind.

Die in Fig. 13 gezeigte Ausführungsvariante umfasst die noppenartigen Erhöhungen 34 zur Fixierung der zu verbindenden Seilstränge.

Die Abschrägungen 15 können selbstverständlich auch bei einer Klemme angewandt werden, bei der die U-förmigen Ausnehmungen sich kreuzen, wie dies bei den Ausnehmungen 2 und 3 des Ausführungsbeispiels der Fig. 1 bis 6 gezeigt sind.

Wenn im Zusammenhang mit der Erfindung von einer Kugelform gesprochen wird, die die Klemme nach der Verformung einnehmen soll, so ist darunter nicht nur eine geometrisch exakte Kugel zu verstehen. Es sind auch Rotationskörper kugelähnlich, bei denen zwischen den einzelnen Außenabmessungen Differenzen bestehen. Wenn auch eine gewölbte Außenform bei der fertigen Klemme in der Regel zu bevorzugen ist und die besten Ergebnisse bringt, so können doch auch Außenformen angewandt werden, die aus einzelnen in sich ebenen Flächen oder aus Flächen bestehen, die eine schwächere Wölbung aufweisen als die entsprechende Kugelform.

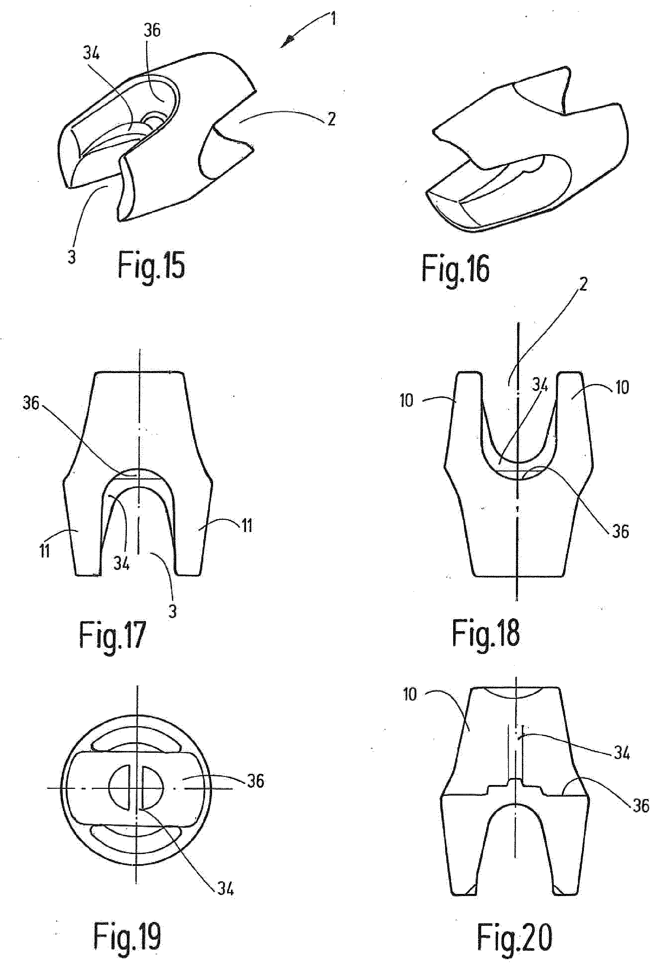

Die Klemme 1 gemäß den Figuren 15 bis 20 weist Ähnlichkeiten zu den Klemmen der vorhergehenden Figuren auf. Der Übersichtlichkeit halber wird hier auf die Unterschiede eingegangen, während ansonsten die Ausführungen zu den Figuren 1 bis 14 auch hier gelten. Die wesentlichen Unterschiede bestehen darin, dass die Erhöhung 34 durchgängig ist und dass die Ausnehmungen 2 und 3 keine gemeinsame Verbindung aufweisen, das heißt, dass sie voneinander getrennt sind.

Die Klemme 1 besteht aus einem Doppelkegel, wobei der Kegelwinkel zwischen 5° und 10°, vorzugsweise 7°, beträgt.

Die beiden U-förmigen Ausnehmungen 2 und 3 haben jeweils einen Grund oder eine Bodenfläche 36, so dass die Klemme 1 einen durchgehenden Mittelteil aufweist.

Die Ausnehmung 2 wird durch die beiden Wände 10 sowie den Grund 36 begrenzt. Die Ausnehmung 3 wird durch die Wände 11 und den Grund 36 begrenzt. In den Ausnehmungen 2 und 3 ist jeweils eine Erhöhung 34 zur Vorfixierung eines Seilstranges vorgesehen. Die Vorfixierung hält die Seilstränge beziehungsweise die Klemme 1 in Position bevor diese verformt wird. Dazu erstreckt sich die Erhöhung 34 durchgehend von einer Wand 11 über den Grund 36 bis zu der gegenüberliegenden Wand 11. Die Erhöhung 34 hat dabei einen Öffnungswinkel α zwischen 20° und 30°, vorzugsweise von 26°. Es hat sich gezeigt, dass ein derartiger Öffnungswinkel α das Einlegen und Vorfixieren eines Seilstranges besonders vorteilig ermöglicht.

Bedingt durch den Öffnungswinkel α verringert sich die Höhe, das heißt die Erstreckung, der Erhöhung 34 über der Wand 11 beziehungsweise über dem Grund 36. Dies bewirkt, dass der Seilstrang bei weiterem Einlegen oder Eindrücken in die Öffnung 2 beziehungsweise 3 weiter fixiert oder eingeklemmt wird. Dadurch wird der Seilstrang sowohl in seiner radialen als auch in seiner axialen Richtung vorfixiert.

## Patentansprüche

1. Klemmverbindung, umfassend eine Klemme (1) und zwei Seilstränge (6, 7, 8, 9), insbesondere zur Bildung von Netzen, wobei die Klemme (1) aus einem unter Druck verformbaren Werkstoff besteht, mit zwei auf gegenüberliegenden Seiten der einstückigen Klemme (1) angeordneten U-förmigen Ausnehmungen (2, 3, 4, 5) in die die zu verbindenden Seilstränge (6, 7, 8, 9) einlegbar sind, wobei die schenkelartigen Wände (10, 11, 12, 13) der U-förmigen Ausnehmungen (2, 3, 4, 5) nach dem Einlegen der Seilstränge (6, 7, 8, 9) gegeneinander gedrückt und verformt werden, um je einen den Seilstrang (6, 7, 8, 9) umschließenden Ring zu bilden, wobei die Klemme (1) vor der Verformung im Wesentlichen die Form eines Doppelkegels (16, 17) aus zwei Kegelstümpfen aufweist, und die U-förmigen Ausnehmungen (2, 3, 4, 5) jeweils im Kegelstumpf angeordnet sind, wobei wenigstens eine der schenkelartigen Wände (10, 11, 12, 13) einer U-förmigen Ausnehmung (2, 3, 4, 5) wenigstens eine in Richtung der U-förmigen Ausnehmung (2, 3, 4, 5) weisende Erhöhung (34) umfasst, **dadurch gekennzeichnet, dass** der Abstand zwischen der Erhöhung (34) und der gegenüber liegenden schenkelartigen Wand kleiner ist als ein Durchmesser (D) der zu verbindenden Seilstränge (6, 7, 8, 9) und eine Erstreckung der Erhöhung (34) von der Schenkelwand (10, 11, 12, 13) dem Durchmesser einer Litze des Seilstrangs entspricht.

2. Klemmverbindung nach Anspruch 1, **dadurch gekennzeichnet, dass** die schenkelartigen Wände (10, 11, 12, 13) jeweils wenigstens eine Erhöhung (34) umfassen, wobei der Abstand gegenüberliegender Erhöhungen (34) kleiner ist als ein Durchmesser (D) der zu verbindenden Seilstränge (6, 7, 8, 9).

3. Klemmverbindung nach Anspruch 1 oder 2, **dadurch gekennzeichnet, dass** die Erhöhungen (34) jeweils wenigstens eine Noppe umfassen.

4. Klemmverbindung nach einem vorgehenden Ansprüche, **dadurch gekennzeichnet, dass** ein Abstand (h) der Erhöhungen (34) vom Grund (36) der U-förmigen Ausnehmungen (2, 3, 4, 5) größer ist als ein halber Durchmesser (D) und kleiner als der Durchmesser (D) der zu verbindenden Seilstränge (6, 7, 8, 9) ist, insbesondere drei Viertel, vorzugsweise zwei Drittel des Durchmessers (D) der zu verbindenden Seilstränge (6, 7, 8, 9) beträgt.

5. Klemmverbindung nach einem vorgehenden Ansprüche, **dadurch gekennzeichnet, dass** die Erhöhung (34) sich in einer parallel zu beiden Schenkelwänden (10, 11, 12, 13) einer U-förmigen Ausnehmung (2, 3, 4, 5) verlaufenden Längsrichtung über die gesamte Länge der Schenkelwand erstreckt.

6. Klemmverbindung nach einem vorgehenden Ansprüche, **dadurch gekennzeichnet, dass** eine Schenkelwand (10, 11, 12, 13) mehrere Erhöhungen umfasst, wobei die Erhöhungen in einer parallel zu beiden Schenkelwänden (10, 11, 12, 13) einer U-förmigen Ausnehmung (2, 3, 4, 5) verlaufenden Längsrichtung angeordnet sind.

7. Klemmverbindung nach einem vorgehenden Ansprüche, **dadurch gekennzeichnet, dass** die Erhöhung von einer Wand (10, 11, 12, 13) über einen Grund (36) der Ausnehmung (2, 3) zu der gegenüberliegenden Wand (10, 11, 12, 13) verläuft.

8. Netz, bestehend aus mindestens einer Klemmverbindung nach einem der vorgehenden Ansprüche.

## Claims

1. A clamp connection, comprising a clamp (1) and two ropes (6, 7, 8, 9), in particular for the formation of nets, wherein the clamp (1) consists of a material that is deformable under pressure, with two U-shaped recesses (2, 3, 4, 5) arranged on opposite sides of the one-piece clamp (1) into which recesses the ropes (6, 7, 8, 9) to be joined together can be placed, wherein the leg-like walls (10, 11, 12, 13) of the U-shaped recesses (2, 3, 4, 5) after inserting the ropes (6, 7, 8, 9) are pressed against one another and deformed, in order to form a ring surrounding the rope (6, 7, 8, 9), wherein before the deformation the clamp (1) essentially has the form of a double cone (16, 17) consisting of two truncated cones, and the U-shaped recesses (2, 3, 4, 5) are each arranged in the truncated cone,
wherein at least one of the leg-like walls (10, 11, 12, 13) of a U-shaped recess (2, 3, 4, 5) comprises at least one elevation (34) pointing in the direction of the U-shaped recess (2, 3, 4, 5),
**characterised in that** the distance between the elevation (34) and the opposite arm-like wall is smaller than a diameter (D) of the ropes (6, 7, 8, 9) to be joined together and an extension of the elevation (34) from the arm wall (10, 11, 12, 13) corresponds to the diameter of a strand of the rope.

2. The clamp connection according to Claim 1, **characterised in that** the arm-like walls (10, 11, 12, 13) each comprise at least one elevation (34), wherein the distance between opposite elevations (34) is smaller than a diameter (D) of the ropes (6, 7, 8, 9) to be joined together.

3. The clamp connection according to Claim 1 or 2, **characterised in that** the elevations (34) comprise at least one bead respectively.

4. The clamp connection according to any of the preceding claims, **characterised in that** a distance (h) of the elevations (34) from the base (36) of the U-shaped recesses (2, 3, 4, 5) is greater than a half diameter (D) and smaller than the diameter (D) of the ropes (6, 7, 8, 9) to be joined together, in particular three quarters, preferably two thirds of the diameter (D) of the ropes (6, 7, 8, 9) to be joined together.

5. The clamp connection according to any of the preceding claims, **characterised in that** the elevation (34) extends in a longitudinal direction running parallel to both arm walls (10, 11, 12, 13) of a U-shaped recess (2, 3, 4, 5) over the whole length of the arm wall.

6. The clamp connection according to any of the preceding claims, **characterised in that** an arm wall (10, 11, 12, 13) comprises a plurality of elevations, wherein the elevations are arranged in a longitudinal direction running parallel to both arm walls (10, 11, 12, 13) of a U-shaped recess (2, 3, 4, 5).

7. The clamp connection according to any of the preceding claims, **characterised in that** the elevation runs from one wall (10, 11, 12, 13) over a base (36) of the recess (2, 3) to the opposite wall (10, 11, 12, 13).

8. A net consisting of at least one clamp connection according to any of the preceding claims.

## Revendications

1. Raccord par serrage comprenant un moyen de serrage (1) et deux brins de câble (6, 7, 8, 9), en particulier destiné à la formation des réseaux, le moyen de serrage (1) étant constitué d'un matériau déformable sous pression, ledit moyen de serrage comportant deux évidements (2, 3, 4, 5) en forme de U, disposés à des côtés opposés du moyen de serrage (1) en une seule pièce, dans lesquels les brins de câble (6, 7, 8, 9) à raccorder peuvent être insérés, des parois (10, 11, 12, 13) en forme de jambe des évidements (2, 3, 4, 5) en forme de U lors de l'insertion des brins de câble (6, 7, 8, 9) sont pressées les unes contre les autres et déformées pour former au brin de câble (6, 7, 8, 9) respectif un anneau entourant, le moyen de serrage (1) comportant, avant la déformation, sensiblement la forme d'un double cône (16, 17) composé de deux cônes tronqués, et lesdits évidements (2, 3, 4, 5) en forme de U étant respectivement disposés dans le cône tronqué,
au moins une des parois (10, 11, 12, 13) en forme de jambe d'un évidement (2, 3, 4, 5) en forme de U comportant au moins une élévation (34), orientée dans la direction de l'évidement (2, 3, 4, 5) en forme de U,
**caractérisé en ce que** la distance entre l'élévation (34) et la paroi en forme de jambe opposée est inférieure à un diamètre (D) des brins de câble (6, 7, 8, 9) à raccorder et un prolongement de l'élévation (34) de la paroi formant jambe (10, 11, 12, 13) correspond au diamètre d'un cordon du brin de câble.

2. Raccord par serrage selon la revendication 1, **caractérisé en ce que** les parois (10, 11, 12, 13) en forme de jambe comprennent respectivement au moins une élévation (34), la distance entre les élévations (34) opposées est inférieure à un diamètre (D) des brins de câbles (6, 7, 8, 9) à raccorder.

3. Raccord par serrage selon la revendication 1 ou 2, **caractérisée en ce que** les élévations (34) comprennent respectivement au moins un bouton.

4. Raccord par serrage selon l'une quelconque des revendications précédentes, **caractérisé en ce qu'**une distance (h) des élévations (34) du fond (36) des évidements (2, 3, 4, 5) en forme de U est supérieure à une moitié du diamètre (D) et inférieur au diamètre (D) des brins de câble (6, 7, 8, 9) à raccorder, en particulier est égale aux trois quarts, de préférence aux deux tiers du diamètre (D) des brins de câbles (6, 7, 8, 9) à raccorder.

5. Raccord par serrage selon l'une quelconque des revendications précédentes, **caractérisé en ce que** l'élévation (34) s'étend dans une direction parallèle aux deux parois formant jambe (10, 11, 12, 13) d'un évidement (2, 3, 4, 5) en forme de U se prolongeant dans la direction longitudinale sur toute la longueur de la paroi formant jambe.

6. Raccord par serrage selon l'une quelconque des revendications précédentes, **caractérisé en ce qu'**une paroi formant jambe (10, 11, 12, 13) comporte une pluralité d'élévations, lesdites élévations étant agencées dans une direction longitudinale se prolongeant parallèle aux deux parois formant jambes (10, 11, 12, 13) d'un évidement (2, 3, 4, 5) en forme de U.

7. Raccord par serrage selon l'une quelconque des revendications précédentes, **caractérisé en ce que** l'élévation s'étend à partir d'une paroi (10, 11, 12, 13) sur un fond (36) de l'évidement (2, 3) vers la paroi (10, 11, 12, 13) opposée.

8. Réseau, comprenant au moins un raccord par serrage selon l'une quelconque des revendications précédentes.
